# EUROPÄISCHE PATENTSCHRIFT

(11) **EP 2 247 919 B1**
(45) Veröffentlichungstag und Bekanntmachung des Hinweises auf die Patenterteilung: **14.05.2014**
(21) Anmeldenummer: 08872001.6
(22) Anmeldetag: 30.12.2008
(51) Int. Cl.: G01M 17/007

(54) **VERFAHREN UND VORRICHTUNG ZUM ÜBERPRÜFEN DER REFERENZIERUNG VON MESSKÖPFEN EINES FAHRWERKSVERMESSUNGSSYSTEMS**
METHOD AND DEVICE FOR CHECKING THE REFERENCING OF MEASURING HEADS IN A CHASSIS MEASURING SYSTEM
PROCÉDÉ ET DISPOSITIF DE CONTRÔLE DU RÉFÉRENCEMENT DE TÊTES DE MESURE D'UN SYSTÈME DE MESURE POUR L'ALIGNEMENT DE CHÂSSIS

(30) Priorität: 28.01.2008 DE 102008006329
(43) Veröffentlichungstag der Anmeldung: 10.11.2010
(73) Patentinhaber: Robert Bosch GmbH, 70442 Stuttgart (DE)
(72) Erfinder: ABRAHAM, Steffen, 31134 Hildesheim (DE); MUHLE, Daniel, 30451 Hannover (DE)
(86) Internationale Anmeldenummer: PCT/EP2008/068343
(87) Internationale Veröffentlichungsnummer: WO 2009/095140

(56) Entgegenhaltungen:
- WO-A-02/31437
- DE-A1- 19 757 760
- DE-A1- 19 934 864

## Beschreibung

Die Erfindung betrifft die Fahrwerksvermessung und insbesondere ein Verfahren und eine Vorrichtung zum Überprüfen der Referenzierung von Messköpfen eines berührungslosen Fahrwerksvermessungssystems.

Bei der optischen Fahrwerksvermessung, z.B. der Messung von Spur und Sturz an Kraftfahrzeugen, werden Messköpfe eingesetzt, die jeweils ein Rad oder eventuell die Räder einer Fahrzeugseite erfassen. Aus den Messwerten werden die Lage von Radachsen, Drehachsen, Radzentren oder Drehzentren errechnet und für die Spur und Sturzbestimmung verwendet.

Eine Grundvoraussetzung in einem System zur Fahrwerks- bzw. Achsvermessung ist, dass die Messwerte aller Messköpfe in einem gemeinsamen Koordinatensystem ("Bezugssystem") vorliegen bzw. in solch ein gemeinsames Koordinatensystem transformiert werden. Die Kenngrößen der geometrischen Lage der Messköpfe untereinander, wie ihre Position und Ausrichtung, die für eine Darstellung der Messgrößen in einem gemeinsamen Koordinatensystem erforderlich sind, werden nachfolgend als Referenzierung der Messköpfe bezeichnet.

Es existieren verschiedene Verfahren zur Herstellung eines gemeinsamen Koordinatensystems im Zusammenhang mit der Achsvermessung:
Bei mechanischen Lösungen (siehe z.B. DE-3904557) werden direkt am Rad mechanische Adapter befestigt, welche die Spur und den Sturz eines einzelnen Rades bestimmen. Zur Herstellung eines gemeinsamen Bezugssystem werden z.B. zusätzliche optische Sensoren in die Adapter integriert, die in der Lage sind, die Orientierung zu Adaptern, die an benachbarten Rädern befestigt sind, zu bestimmen.

Berührungslose Lösungen zeichnen sich dadurch aus, dass keine Adapter mit Messfunktion am Rad befestigt werden. Die Messung der gesuchten Winkelgrößen wird in der Regel von einem Messkopf ausgefiihrt, der eine Videokamera aufweist. Die berührungslosen Lösungen existieren in verschiedenen Varianten:
In einer ersten Variante wird die Referenzierung nur beim Aufbau des Systems bestimmt und für alle folgenden Messungen als konstant angesehen (siehe z.B. US 4,745,469, US 5,870,315).

In einer zweiten Variante wird jedes Rad von einem eigenen Messkopf mit einem Einzel- oder Stereovideosensor beobachtet. Die Werte der Achsvermessung liegen zunächst nur im lokalen Messsystem des einzelnen Messkopfes vor. Zur Transformation der Messwerte in ein gemeinsames Bezugssystem werden vor der bzw. während der Messung Punkte an einem Passpunktkörper gemessen, wobei jede Kamera immer nur einen Teil des Passpunktkörpers sehen muss. Aus der Messung der Passpunkte im lokalen Bezugssystem des einzelnen Messsystems und den bekannten Koordinaten der Passpunkte im gemeinsamen Passpunktsystem lässt sich für jeden Messkopf eine Transformation in das gemeinsame Passpunktsystem bestimmen. Diese Referenzierung wird in der Regel vor jeder Messung durchgeführt (siehe z.B. DE 3618480, DE 19757763, DE 10050653, US 2006 0279728).

In einer dritten Variante wird ein einzelner Messkopf zur Herstellung eines gemeinsamen Bezugssystems um eine zusätzliche Kamera oder ein Kalibrierelement erweitert, das sich in einer kalibrierten Relation zum lokalen Koordinatensystem des Messkopfes befindet. Die Orientierung zwischen Messkopf und zusätzlicher Kamera wird in der Regel nur einmal bestimmt und für alle folgenden Messungen als konstant angesehen (siehe z.B. EP 1184640, US 6,968,282, EP 1309832).

Die bisher bekannten Verfahren zur Referenzierung sind ungenau und/oder aufwendig. Es ist daher die Aufgabe der vorliegenden Erfindung, ein Verfahren und eine Vorrichtung zur genau und schnell durchführbaren Überprüfung der Referenzierung von Messköpfen eines Fahrwerksvermessungssystems zur Verfügung zu stellen, ohne den Hardware-Aufwand zu erhöhen.

Diese Aufgabe wird von dem Verfahren der unabhängigen Ansprüche 1 und 2 und einer Vorrichtung gemäß den unabhängigen Ansprüchen 9 und 10 vollständig gelöst.

Die Erfindung umfasst ein Verfahren zum Überprüfen der Referenzierung von wenigstens zwei Messköpfen eines berührungslosen Fahrwerksvermessungssystems mit den folgenden Schritten: Erfassen wenigstens eines Geometriedetails eines Fahrzeugs mit den wenigstens zwei Messköpfen; Bestimmen einer Anfangsposition des Geometriedetails in dem jedem Messkopf zugeordneten Koordinatensystem; Transformieren der Anfangsposition des Geometriedetails in ein gemeinsames Koordinatensystem; Ausführen einer Relativbewegung zwischen den Messköpfen einerseits und dem Fahrzeug andererseits, wobei die relative Position der Messköpfe zueinander konstant gehalten wird; erneutes Erfassen wenigstens eines Geometriedetails eines Fahrzeugs mit den wenigstens zwei Messköpfen; Bestimmen einer Endposition des wenigstens einen Geometriedetails in dem jedem Messkopf zugeordneten Koordinatensystem; Transformieren der Endposition des Geometriedetails in das gemeinsame Koordinatensystem; Bestimmen des Bewegungsvektors aus der Differenz zwischen der Endposition und der Anfangsposition des wenigstens einen Geometriedetails für jeden der Messköpfe in dem gemeinsamen Koordinatensystem; Überprüfen des Bewegungsvektors für den ersten Messkopf auf Übereinstimmung mit dem Bewegungsvektor für den weiteren Messkopf bzw. die weiteren Messköpfe.

Die Erfindung umfasst auch ein Verfahren zur Überprüfung der Referenzierung von wenigstens zwei Messköpfen eines berührungslosen Fahrwerksvermessungssystems mit den folgenden Schritten: Erfassen wenigstens eines Geometriedetails des Fahrzeugs mit den Messköpfen; Bestimmen einer Anfangsposition des Geometriedetails in dem jedem Messkopf zugeordneten Koordinatensystem; Ausführen einer Relativbewegung zwischen den Messköpfen einerseits und dem Fahrzeug andererseits, wobei die relative Position der Messköpfe zueinander konstant gehalten wird; erneutes Erfassen des wenigstens einen Geometriedetails des Fahrzeugs mit mit den Messköpfen; Bestimmen einer Endposition des Geometriedetails in dem jedem Messkopf zugeordneten Koordinatensystem; Bestimmen der Bewegungen aus der Differenz zwischen der Endposition und der Anfangsposition des Geometriedetails in dem jedem Messkopf zugeordneten Koordinatensystem; Transformieren der Bewegungen in ein gemeinsames Koordinatensystem; Überprüfen des Bewegungsvektors für den ersten Messkopf auf Übereinstimmung mit dem Bewegungsvektor für den weiteren Messkopf bzw. die weiteren Messköpfe in dem gemeinsamen Koordinatensystem.

Durch die erfindungsgemäßen Verfahren kann die Referenzierung des Fahrwerkvermessungssystems anhand einer Relativbewegung zwischen den Messköpfen und dem Fahrzeug im Messfeld der Messköpfe schnell und genau überprüft werden, z.B. indem das Fahrzeug an den Messköpfen vorbei gefahren wird. Dadurch wird die Genauigkeit der auf die Referenzierung folgenden Fahrwerkvermessung verbessert, ohne dass eine merklich längere Zeit für die Durchführung der Messung benötigt wird. Es ist keine zusätzliche Hardware erforderlich, um die erfindungsgemäße Referenzierung durchzuführen, so dass die Erfindung kostengünstig verwirklicht werden kann. Die Annahme, dass einmalig gemessene Orientierungen während der Messung bzw. während der Lebensdauer des Messsystems konstant bleiben, kann kontrolliert werden. Wird eine Änderung der Lageparameter bemerkt, kann eine Meldung an den Benutzer gegeben werden, und die geänderte Orientierung kann nachgeführt werden.

Derzeit bekannte Verfahren basieren auf den Annahmen, dass die geometrischen Lageparameter, die den Bezug zu einem gemeinsamen Koordinatensystem herstellen, während eines Achsmessvorganges stabil bleiben, dass vorab kalibrierte Orientierungen während des Betriebs des Messsystems konstant bleiben, oder dass zusätzliche optische Messsysteme und mechanische Messsysteme in die Messköpfe zur Überwachung der Referenzierung integriert werden. Abweichungen von diesen Annahmen führen direkt zu einem Messfehler in den gesuchten Zielgrößen. Die erfindungsgemäßen Verfahren prüfen diese Annahmen sowie erkennen und korrigieren Abweichungen, was die Messgenauigkeit und Zuverlässigkeit des Messsystems erhöht.

Das erfindungsgemäße Verfahren wird zweckmäßigerweise in die Messdatenauswertung bei Fahrtbewegung des Fahrzeuges zur Erkennung einer Veränderung oder zur Korrektur der Referenzierung integriert, und kann bei der Achsvermessung oder bei dynamischen Prüfungen am Fahrwerk, wie z.B. Stoßdämpferprüfung, zum Einsatz kommen, um die Qualität der Messergebnisse zu erhöhen.

Die Verfahren nach den Ansprüchen 1 und 2 unterscheiden sich voneinander dadurch, dass bei Anspruch 1 zunächst die Positionen der Geometriedetails in das gemeinsame Koordinatensystem transformiert werden und die Bewegungsvektoren dann in dem gemeinsamen Koordinatensystem bestimmt werden, wogegen bei Anspruch 2 die Bewegungsvektoren zunächst im Koordinatensystem des jeweiligen Messkopfs bestimmt und dann in das globale Koordinatensystem transformiert werden.

Erfindungsgemäß ist der Oberbegriff Fahrwerksvermessung so zu verstehen, dass darunter die technischen Gebiete der Achsvermessung, der Stoßdämpferprüfung und der Fahrwerksprüfung einschließlich der Prüfung der Gelenkspiele und der Prüfung der Radaufhängung fallen.

In einer Ausführungsform umfasst die Relativbewegung zwischen den Messköpfen einerseits und dem Fahrzeug andererseits wenigstens zwei Translationen, die nicht parallel zueinander sind. Dadurch wird die Überprüfung der Referenzierung verbessert, da alle gegenseitigen Rotationen der Messköpfe erkannt werden.

In einer Ausfuhrungsform ist das von dem ersten Messkopf erfasste Geometriedetail auf einer ersten Seite des Fahrzeugs angeordnet, die dem ersten Messkopf zugewandt ist, und das von dem zweiten Messkopf erfasste Geometriedetail ist auf einer der ersten Seite gegenüberliegenden Seite des Fahrzeugs angeordnet, die dem zweiten Messkopf zugewandt ist. Ein Geometriedetail, das auf einer dem Messkopf zugewandten Seite des Fahrzeugs angeordnet ist, kann von dem Messkopf besonders zuverlässig erfasst werden.

In einer alternativen Ausführungsform können die beiden Messköpfe auch ein gemeinsames, von beiden Seiten sichtbares Geometriedetail erfassen.

Das Geometriedetail kann ein auf dem Fahrzeug angebrachtes Messtarget oder ein vorhandenes Geometriedetail des Fahrzeugs, wie z.B. eine Kante einer Felge oder eine Kotflügels sein. Messtargets sind so ausgebildet, dass die von den Messköpfen besonders zuverlässig erfasst werden können. Durch die Verwendung vorhandener Geometriedetails können die Arbeitsschritte des Anbringens und Entfernens der Messtargets vermieden werden. Dadurch wird die Durchführung der Messung weiter beschleunigt.

In einer Ausführungsform wird das Fahrzeug gegenüber ortsfesten Messköpfen bewegt. Ortsfeste Messköpfe sind besonders einfach und kostengünstig herzustellen, da sie keine beweglichen Teil umfassen. Das Bewegen des Fahrzeugs stellt in der Regel keinen zusätzlichen Aufwand dar, da das Fahrzeug ohnehin in den Messplatz gefahren wird.

In einer anderen Ausführungsform werden die Messköpfe gegenüber dem Fahrzeug bewegt. Dies ermöglicht es, das erfindungsgemäße Verfahren auch dann auszuführen, wenn am Messplatz kein Raum zum Bewegen des Fahrzeugs vorhanden ist.

In einer Ausführungsform umfasst das Verfahren auch das Nachjustieren der Messköpfe. Evtl. vorhandene Änderungen der vorab bestimmten Orientierungen können nachgeführt werden. Dadurch wird die Genauigkeit der folgenden Fahrwerksvermessung verbessert.

Dabei können die beiden bestimmten Bewegungsvektoren in Übereinstimmung gebracht werden. Für die Nachjustage kann man auch die Abweichung zwischen einer oder mehrerer Messungen von Merkmalen im Kamerabild und einer Projektion eines 3D-Modelles der Merkmale in das Kamerabild minimieren und dabei die Transformationsparameter K1 nach K2 optimieren.

In einer Ausführungsform umfasst das Nachjustieren das Anpassen von Parametern zur Umreclmung der Position aus den lokalen Koordinatensystemen in das gemeinsame Koordinatensystem umfasst. Dadurch kann das Nachjustieren durchgeführt werden, ohne die Messköpfe zu bewegen, so dass das Nachjustieren besonders einfach und schnell durchgeführt werden kann. Auch müssen die Messköpfe nicht mechanisch justierbar ausgestaltet sein und können daher kostengünstiger hergestellt werden.

Die Erfindung umfasst weiterhin eine Vorrichtung zum Vermessen der Fahrwerksgeometrie eines Fahrzeugs, die eine Anordnung von wenigstens zwei Messköpfen, die eingerichtet sind, im Betrieb wenigstens ein Geometriedetail des Fahrzeugs zu erfassen und dessen Position in dem jedem Messkopfes zugeordneten Koordinatensystem zu bestimmen, und eine Auswerteinrichtung aufweist, die eingerichtet ist, im Betrieb die Position des Geometriedetails in einer Anfangslage und die Position des Geometriedetails in einer Endlage aus dem Koordinatensystem des jeweiligen Messkopfes in ein gemeinsames Koordinatensystem zu transformieren, aus aus der Differenz der Position des Geometriedetails in der Anfangslage und der Position des Geometriedetails in der Endlage für jeden der Messköpfe einen Bewegungsvektor in dem gemeinsamen Koordinatensystem zu bestimmen und den Bewegungsvektor für den ersten Messkopf auf Übereinstimmung mit dem Bewegungsvektor für den weiteren Messkopf bzw. für die weiteren Messköpfe zu überprüfen.

Darüber hinaus umfasst die Erfindung ein Vorrichtung zum Vermessen der Fahrwerksgeometrie eines Fahrzeugs, die eine Anordnung von wenigstens zwei Messköpfen, die eingerichtet sind, im Betrieb wenigstens ein Geometriedetail des Fahrzeugs zu erfassen und dessen Position in dem jedem Messkopfes zugeordneten Koordinatensystem zu bestimmen, und eine Auswerteinrichtung aufweist, die eingerichtet ist, im Betrieb aus der Differenz der Position des Geometriedetails in einer Anfangslage und der Position des Geometriedetails in einer Endlage für jeden Messkopf einen Bewegungsvektor zu bestimmen, den Bewegungsvektor für den ersten Messkopf und den Bewegungsvektor für den weiteren Messkopf bzw. für die weiteren Messköpfe in ein gemeinsames Koordinatensystem zu übertragen, und den Bewegungsvektor für den ersten Messkopf auf Übereinstimmung mit dem Bewegungsvektor für den weiteren Messkopf bzw. für die weiteren Messköpfe zu überprüfen.

In einer Ausführungsform weisen zwei Messköpfe je wenigstens eine Kamera auf. Durch eine Kamera kann das wenigstens eine Geometriedetail besonders einfach und zuverlässig erfasst werden. In weiteren Ausführungsformen umfasst wenigstens einer der Messköpfe zwei oder mehr Kameras, um die Zuverlässigkeit der Erfassung zu erhöhen und die Genauigkeit zu verbessern.

In einer Ausführungsform weist die Vorrichtung zusätzlich eine Bewegungsvorrichtung auf, die ausgebildet ist, um im Betrieb eine Relativbewegung zwischen der Anordnung von Messköpfen einerseits und dem Fahrzeug anderseits zwischen der Anfangslage und der Endlage auszuführen, wobei die relative Position der Messköpfe zueinander konstant gehalten wird. Dadurch ist es möglich, eine definierte und kontrollierte Relativbewegung zwischen der Anordnung von Messköpfen und dem Fahrzeug auszuführen. Insbesondere können Unfälle durch eine unkontrollierte Bewegung des Fahrzeug vermieden werden.

In weiteren Ausführungsformen ist die erfindungsgemäße Vorrichtung ausgebildet, um im Betrieb die in den abhängigen Verfahrensansprüchen beanspruchten Verfahrensschritte auszuführen und weist die entsprechenden strukturellen Merkmale auf.

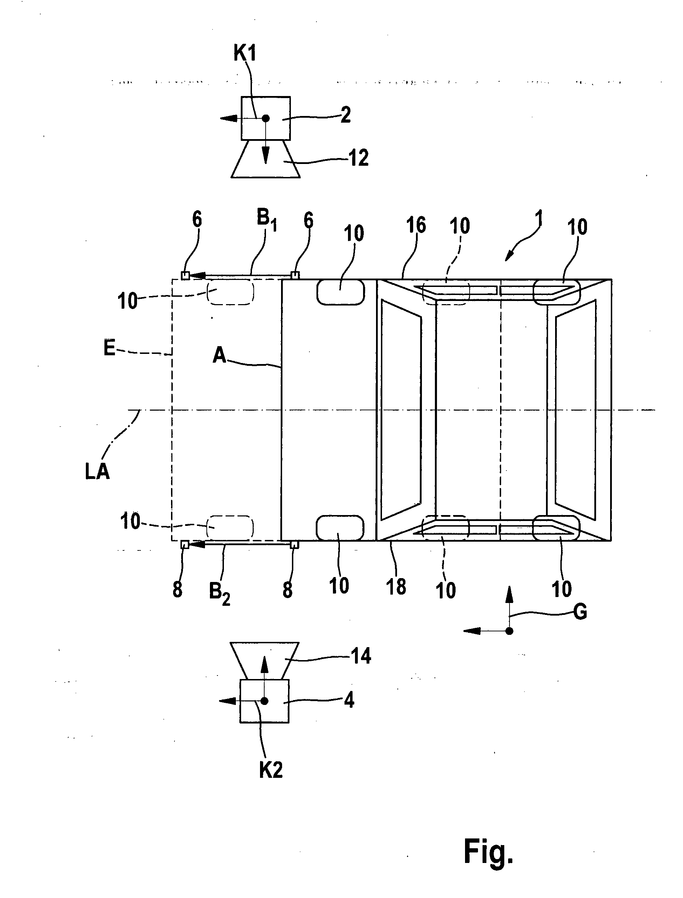

Die Erfindung wird im Folgenden anhand der beigefügten Figur erläutert, die schematisch eine Vorrichtung zur Durchführung des erfindungsgemäßen Verfahrens in der Draufsicht zeigt.

Die Figur zeigt schematisch in der Draufsicht die Umrisse eine Fahrzeugs 1, in einer Anfangslage A (durchgezogene Linie) zum Zeitpunkt tᵢ und in einer Endlage E (gestrichelte Linic) zum Zeitpunkt tᵢ₊₁. In der Figur sind zur Vereinfachung nur zwei Zeitpunkte dargestellt. Neben den Umrissen der Karosserie des Fahrzeugs 1 sind schematisch vier Räder 10 dargestellt. Das Fahrzeug 1 ist so angeordnet, dass seine Vorderseite in der Figur links und seine Rückseite rechts dargestellt ist. Die Endlage E befindet sich horizontal links von der Anfangslage A. Die Bewegung zwischen den Anfangslage A und der Endlage E erfolgt parallel zur horizontal verlaufenden Längsachse LA des Fahrzeugs 1. Das Fahrzeug 1 wird bei der hier gezeigten Bewegung nicht rotiert.

In Bewegungsrichtung links und rechts von dem Fahrzeug 1 ist je ein Messkopf 2, 4 angeordnet, der jeweils eine Kamera 12, 14 aufweist, die auf das Fahrzeug 1 gerichtet ist. Auf den den beiden Messköpfen 2, 4 zugewandten Seiten 16, 18 des Fahrzeugs 1 ist jeweils ein Messtarget 6, 8 angebracht, das von der Kamera 12, 14 des auf diese Seite 16, 18 gerichteten Messkopfes 2, 4 erfasst wird. Die relative Orientierung der Messköpfe 2, 4 wurde zuvor durch eine etabliertes Verfahren bestimmt (Referenzierung) und ist bekannt.

Die Messköpfe 2, 4 messen in einer Ausführungsform die Radachsen und Radzentren der Räder 10 in dem lokalen Koordinatensystem K1 bzw. K2 des jeweiligen Messkopfes. Die Referenzierung erlaubt jetzt die Transformation der Radachsen, -Zentren in das globale Koordinatensystem G, z.B. der Hebebühne, und damit z.B. die Berechnung von Spur und Sturz.

In dem in der Figur gezeigten Beispiel sind die Messtargets 6, 8 vor den vorderen Rädern 10 des Fahrzeugs 1 angebracht. Dies ist jedoch nur eine beispielhafte Position und die Messtargets 6, 8 können an jeder beliebigen Stelle des Fahrzeugs 1 angebracht werden, die sich im Blickfeld wenigstens einer Kamera 12, 14 wenigstens eines Messkopfes 2, 4 befindet.

Zunächst befindet sich das Fahrzeug 1 in der Anfangslage A, die Messtargets 6, 8 werden jeweils von der Kamera 12, 14 wenigstens eines der Messköpfe 2, 4 erfasst und die Anfangsposition jedes Messtargets 6, 8 wird im Koordinatensystem K1, K2 des jeweiligen Messkopfes 2, 4 bestimmt und in dem Messkopf 2, 4 oder einer nicht gezeigten Auswerteinrichtung, die über eine Datenleitung oder eine Funkverbindung mit den Messköpfen 2, 4 verbunden ist, gespeichert.

Daraufhin wird das Fahrzeug 1 von der Anfangslage manuell oder automatisch geführt in die Endlage E bewegt. In dem in der Figur gezeigten Beispiel wird das Fahrzeug 1 von rechts nach links in Vorwärtsrichtung des Fahrzeugs 1 bewegt. Das Fahrzeug 1 könnte jedoch ebenso von links nach rechts, also "rückwärts" bewegt werden. In der Endlage E werden die Messtargets 6, 8 erneut von den Kameras 12, 14 der Messköpfe 2, 4 erfasst und die Endposition jedes Messtargets 6, 8 wird im Koordinatensystem K1, K2 des jeweiligen Messkopfes 2, 4 bestimmt und in dem Messkopf 2, 4 oder einer nicht gezeigten Auswerteinrichtung gespeichert.

Aus der Differenz zwischen der Endposition und der Anfangsposition des Geometriedetails 6, 8 in dem jedem Messkopf 2, 4 zugeordneten Koordinatensystem K₁, K₂ werden die Bewegungsvektoren B₁, B₂ der Geometriedetails 6, 8 berechnet. Diese Berechnung kann in den Messköpfen 2, 4 oder in der Auswerteinrichtung durchgeführt werden. Die Bewegungsvektoren B₁, B₂ werden in ein gemeinsames Koordinatensystem G transformiert und miteinander verglichen.

Alternativ können zunächst die Anfangs- und die Endposition des jeweiligen Messtargets 6, 8 in das globale Koordinatensystem G transformiert und dann die beiden Bewegungsvektoren B₁, B₂ im globalen Koordinatensystem G bestimmt und miteinander verglichen werden.

Die Einzelheiten der Koordinatentransformation zwischen verschiedenen Koordinatensystem sind dem Fachmann bekannt (siehe z.B. HH Chen: A screw motion approach to unique-ness analysis of head-eye geometry. Computer Vision and Pattern Recognition, 1991. Proceedings CV.Ple91., IEEE Computer Society Conference, Seiten 145-151, 1991) und werden daher hier nicht näher erläutert.

Bei einer korrekten Referenzierung sind die Bewegungsvektoren B₁, B₂ in dem gemeinsamen Koordinatensystem G identisch, d.h. die Differenz zwischen den beiden Bewegungsvektoren B₁, B₂ ist kleiner als ein vorgegebener Toleranzwert. Ist die Differenz der beiden Bewegungsvektoren B₁, B₂ in dem gemeinsamen Koordinatensystem G größer als der vorgegebene Toleranzwert, ist die Referenzierung fehlerhaft und muss nachjustiert werden, um bei der Fahrwerksvermessung genaue Ergebnisse zu erhalten, d. h. eine Änderung der relativen Orientierung wird direkt als Fehler in der Abbildung der Bewegung aufeinander sichtbar.

Das Nachjustieren kann durch ein mechanisches Verstellen bzw. Nachführen der Messköpfe 2, 4 und/oder der zugehörigen Kameras 12, 14 oder durch Anpassen der Parameter der Transformation aus den Koordinatensystemen K1, K2 der Messköpfe 2, 4 in das globale Koordinatensystem G vorgenommen werden.

Für eine eindeutige Bestimmung aller Parameter der Orientierung der beiden Koordinatensysteme K1, K2 im globalen Koordinatensystem G müssen mindestens zwei unterschiedliche Bewegungen beobachtet werden, die nicht parallel zueinander liegen. Für die Referenzierung zur Fahrwerksvermessung ist es jedoch in der Regel ausreichend, nur einen Teil der Parameter zu bestimmen, so dass eine geradlinige Bewegung (Translation), wie z.B. eine geradlinige Durchfahrt durch die Anordnung der Messköpfe 2, 4, ausreichend ist.

Sollte eine solche vereinfachte Überprüfung der Referenzierung im Einzelfall nicht ausreichend sein und sollen insbesondere auch die Rotation um die Bewegungsrichtung der ersten Translation und Translationen zwischen den Messköpfen 2, 4 bestimmt werden, so sind zusätzlich weitere geeignete Bewegungen zwischen dem Fahrzeug 1 und den Messköpfen 2, 4 durchzuführen. Solche Bewegungen können z.B. mit einer beweglichen und insb. drehbaren Hebebühne, auf der das Fahrzeug 1 platziert wird, ausgeführt werden. Alternativ kann die Anordnung der Messköpfe 2, 4 relativ zu dem Fahrzeug 1 verschwenkt werden, wobei die relative Position der Messköpfe 2, 4 zueinander während des Verschwenkens konstant gehalten wird.

Im vorangehend beispielhaft beschriebenen Verfahren wird die jeweilige Position des Geometriedetails 6, 8 in einer Anfangslage A und einer Endlage E bestimmt, um die Bewegung zu ermitteln. Es können jedoch auch weitere Positionen, die zwischen der Anfangslage A und der Endlage E liegen bestimmt werden, um die Genauigkeit des Verfahrens zu verbessern.

## Patentansprüche

1. Verfahren zur Überprüfung der Referenzierung von wenigstens zwei Messköpfen (2, 4) eines berührungslosen Fahrwerksvermessungssystems mit den folgenden Schritten:
Erfassen wenigstens eines Geometriedetails (6) eines Fahrzeugs (1) mit den Messköpfen (2, 4);
Bestimmen einer Anfangsposition des Geometriedetails (6) in dem jedem Messkopf (2, 4) zugeordneten Koordinatensystem (K₁, K₂);
Transformieren der Anfangsposition des Geometriedetails (6) in ein gemeinsames Koordinatensystem (G);
Ausführen einer Relativbewegung (B₁, B₂) zwischen den Messköpfen (2, 4) einerseits und dem Fahrzeug (1) andererseits, wobei die relative Position der Messköpfe (2, 4) zueinander konstant gehalten wird;
Erfassen wenigstens eines Geometriedetails (6) eines Fahrzeugs (1) mit den Messköpfen (2, 4);
Bestimmen einer Endposition des wenigstens einen Geometriedetails (6) in dem jedem Messkopf (2, 4) zugeordneten Koordinatensystem (K₁, K₂);
Transformieren der Endposition des Geometriedetails (6) in das gemeinsame Koordinatensystem (G);
Bestimmen des Bewegungsvektors (B₁, B₂) aus der Differenz zwischen der Endposition und der Anfangsposition des wenigstens einen Geometriedetails (6) für jeden der Messköpfe (2, 4) in dem gemeinsamen Koordinatensystem (G);
Überprüfen des Bewegungsvektors (B₁) für den ersten Messkopf (2) auf Übereinstimmung mit dem Bewegungsvektor (B₂) für den weiteren Messkopf (4) bzw. die weiteren Messköpfe (4).

2. Verfahren zur Überprüfung der Referenzierung von wenigstens zwei Messköpfen (2, 4) eines berührungslosen Fahrwerksvermessungssystems mit den folgenden Schritten:
Erfassen wenigstens eines Geometriedetails (6) des Fahrzeugs (1) mit den Messköpfen (2, 4);
Bestimmen einer Anfangsposition des Geometriedetails (6) in dem jedem Messkopf (2, 4) zugeordneten Koordinatensystem (K₁, K₂);
Ausführen einer Relativbewegung (B₁, B₂) zwischen den Messköpfen (2, 4) einerseits und dem Fahrzeug (1) andererseits, wobei die relative Position der Messköpfe (2, 4) zueinander konstant gehalten wird;
Erfassen des wenigstens einen Geometriedetails (6) des Fahrzeugs (1) mit mit den beiden Messköpfen (2, 4);
Bestimmen einer Endposition des Geometriedetails (6) in dem jedem Messkopf (2, 4) zugeordneten Koordinatensystem (K₁, K₂);
Bestimmen der Bewegungen (B₁, B₂) aus der Differenz zwischen der Endposition und der Anfangsposition des Geometriedetails (6) in dem jedem Messkopf (2, 4) zugeordneten Koordinatensystem (K₁, K₂);
Transformieren der Bewegungen (B₁, B₂) in ein gemeinsames Koordinatensystem (G);
Überprüfen des Bewegungsvektors (B₁) für den ersten Messkopf (2) auf Übereinstimmung mit dem Bewegungsvektor (B₂) für den weiteren Messkopf (4) bzw. die weiteren Messköpfe (4) in dem gemeinsamen Koordinatensystem.

3. Verfahren nach Anspruch 1 oder 2, wobei die Bewegung (B₁, B₂) wenigstens zwei zueinander nicht parallele Translationen umfasst.

4. Verfahren nach einem der vorangehenden Ansprüche, wobei das von dem ersten Messkopf (2) erfasste Geometriedetail (6) auf einer ersten Seite des Fahrzeugs (1) und das von dem zweiten Messkopf (4) erfasste Geometriedetail (6) auf einer der ersten Seite gegenüberliegenden Seite des Fahrzeugs (1) angeordnet ist.

5. Verfahren nach einem der vorangehenden Ansprüche, wobei das Fahrzeug (1) gegenüber den ortsfesten Messköpfen (2, 4) bewegt wird.

6. Verfahren nach einem der vorangehenden Ansprüche, wobei die Messköpfe (2, 4) gegenüber dem Fahrzeug (1) bewegt werden.

7. Verfahren nach einem der vorangehenden Ansprüche, wobei das Verfahren zusätzlich den Schritt des Nachjustierens der Messköpfe (2, 4) umfasst.

8. Verfahren nach Anspruch 7, wobei bei dem Schritt des Nachjustierens der Messköpfe (2, 4) die von den Messköpfen (2, 4) bestimmten Bewegungsvektoren (B₁, B₂) in Übereinstimmung gebracht werden.

9. Verfahren nach Anspruch 7 oder 8, wobei das Nachjustieren das Anpassen von Parametern zum Transformieren der Position aus den lokalen Koordinatensystemen (K₁, K₂) in das gemeinsame Koordinatensystem (G) umfasst.

10. Vorrichtung zur Überprüfung der Referenzürung von Messköpfen zum Vermessen der Fahrwerksgeometrie eines Fahrzeugs (1), aufweisend:
eine Anordnung von wenigstens zwei Messköpfen (2; 4), die eingerichtet sind, im Betrieb wenigstens ein Geometriedetail (6) des Fahrzeugs (1) zu erfassen und dessen Position in dem jedem Messkopfes (2, 4) zugeordneten Koordinatensystem (K₁, K₂) zu bestimmen,
eine Auswerteinrichtung, die Mittel aufweist, um
die Position des Geometriedetails (6) in einer Anfangslage (A) und die Position des Geometriedetails (6) in einer Endlage (E) aus dem Koordinatensystem (K₁, K₂) des jeweiligen Messkopfes (2, 4) in ein gemeinsames Koordinatensystem (G) zu transformieren,
aus aus der Differenz der Position des Geometriedetails (6) in der Anfangslage (A) und der Position des Geometriedetails (6) in der Endlage (E) für jeden der Messköpfe (2, 4) einen Bewegungsvektor (B₁, B₂) in dem gemeinsamen Koordinatensystem (G) zu bestimmen und
den Bewegungsvektor (B₁) für den ersten Messkopf (2) auf Übereinstimmung mit dem Bewegungsvektor (B₂) für den weiteren Messkopf (4) bzw. weitere Messköpfe (4) zu überprüfen.

11. Vorrichtung zur Überprüfung der Referenzürung von Messköpfen zum Vermessen der Fahrwerksgeometrie eines Fahrzeugs (1), aufweisend:
eine Anordnung von wenigstens zwei Messköpfen (2, 4), die eingerichtet sind, im Betrieb wenigstens ein Geometriedetail (6) des Fahrzeugs (1) zu erfassen und dessen Position in dem jedem Messkopfes (2, 4) zugeordneten Koordinatensystem (K₁, K₂) zu bestimmen,
eine Auswerteinrichtung, die Mittel aufweist, um
aus der Differenz der Position des Geometriedetails (6) in einer Anfangslage (A) und der Position des Geometriedetails (6) in einer Endlage (E) für jeden Messkopf (2, 4) einen Bewegungsvektor (B₁, B₂) zu bestimmen,
den Bewegungsvektor (B₁) für den ersten Messkopf (2) und den Bewegungsvektor (B₂) für den zweiten Messkopf (4) in ein gemeinsames Koordinatensystem (G) zu übertragen, und
den Bewegungsvektor (B₁) für den ersten Messkopf (2) auf Übereinstimmung mit dem Bewegungsvektor (B₂) für den weiteren Messkopf (4) bzw. weitere Messköpfe (4) zu überprüfen.

12. Vorrichtung nach Anspruch 10 oder 11, wobei wenigstens einer der Messköpfe (2, 4) wenigstens eine Kamera (12, 14) aufweist.

13. Vorrichtung nach einem der Ansprüche 10 bis 12, wobei die Vorrichtung zusätzlich eine Bewegungsvorrichtung aufweist, die ausgebildet ist, um im Betrieb eine Relativbewegung zwischen der Anordnung von Messköpfen (2, 4) einerseits und dem Fahrzeug (1) anderseits zwischen der Anfangslage (A) und der Endlage (E) auszuführen, wobei die relative Position der Messköpfe (2, 4) zueinander konstant,gehalten wird.

## Claims

1. Method for checking the referencing of at least two measuring heads (2, 4) of a contactless chassis measuring system, having the following steps:
detecting at least one geometric detail (6) of a vehicle (1) with the aid of the measuring heads (2, 4);
determining an initial position of the geometric detail (6) in the coordinate system (K₁, K₂) assigned to each measuring head (2, 4);
transforming the initial position of the geometric detail (6) into a common coordinate system (G);
performing a relative movement (B₁, B₂) between the measuring heads (2, 4) on the one hand, and the vehicle (1) on the other hand, the position of the measuring heads (2, 4) relative to one another being kept constant;
detecting at least one geometric detail (6) of a vehicle (1) with the aid of the measuring heads (2, 4);
determining a final position of the at least one geometric detail (6) in the coordinate system (K₁, K₂) assigned to each measuring head (2, 4);
transforming the final position of the geometric detail (6) into the common coordinate system (G);
determining the motion vector (B₁, B₂) from the difference between the final position and the initial position of the at least one geometric detail (6) for each of the measuring heads (2, 4) in the common coordinate system (G);
checking the motion vector (B₁) for the first measuring head (2) for correspondence with the motion vector (B₂) for the further measuring head (4) or the further measuring heads (4).

2. Method for checking the referencing of at least two measuring heads (2, 4) of a contactless chassis measuring system, having the following steps:
detecting at least one geometric detail (6) of the vehicle (1) with the aid of the measuring heads (2, 4);
determining an initial position of the geometric detail (6) in the coordinate system (K₁, K₂) assigned to each measuring head (2, 4);
performing a relative movement (B₁, B₂) between the measuring heads (2, 4) on the one hand, and the vehicle (1) on the other hand, the position of the measuring heads (2, 4) relative to one another being kept constant;
detecting the at least one geometric detail (6) of the vehicle (1) with the aid of the two measuring heads (2, 4);
determining a final position of the geometric detail (6) in the coordinate system (K₁, K₂) assigned to each measuring head (2, 4);
determining the movements (B₁, B₂) from the difference between the final position and the initial position of the geometric detail (6) in the coordinate system (K₁, K₂) assigned to each measuring head (2, 4);
transforming the movements (B₁, B₂) into a common coordinate system (G);
checking the motion vector (B₁) for the first measuring head (2) for correspondence with the motion vector (B₂) for the further measuring head (4) or the further measuring heads (4) in the common coordinate system.

3. Method according to Claim 1 or 2, in which the movement (B₁, B₂) comprises at least two translations not parallel to one another.

4. Method according to one of the preceding claims, in which the geometric detail (6) detected by the first measuring head (2) is arranged on a first side of the vehicle (1), and the geometric detail (6) detected by the second measuring head (4) is arranged on a side of the vehicle (1) opposite the first side.

5. Method according to one of the preceding claims, in which the vehicle (1) is moved in comparison with the fixed measuring heads (2, 4).

6. Method according to one of the preceding claims, in which the measuring heads (2, 4) are moved in comparison with the vehicle (1).

7. Method according to one of the preceding claims, in which the method additionally comprises the step of readjusting the measuring heads (2, 4).

8. Method according to Claim 7, in which in the step of readjusting the measuring heads (2, 4) the motion vectors (B₁, B₂) determined by the measuring heads (2, 4) are brought into correspondence.

9. Method according to Claim 7 or 8, in which the readjustment comprises adapting parameters in order to transform the position from the local coordinate systems (K₁, K₂) into the common coordinate system (G).

10. Device for checking the referencing of measuring heads in order to measure the chassis geometry of a vehicle (1), having:
an arrangement of at least two measuring heads (2, 4) which are set up to detect at least one geometric detail (6) of the vehicle (1) during operation, and to determine the position thereof in the coordinate system (K₁, K₂) assigned to each measuring head (2, 4), an evaluation device which has means
for transforming the position of the geometric detail (6) in an initial position (A) and the position of the geometric detail (6) in a final position (E) from the coordinate system (K₁, K₂) of the respective measuring head (2, 4) into a common coordinate system (G),
for determining a motion vector (B₁, B₂) in the common coordinate system (G) from the difference between the position of the geometric detail (6) in the initial position (A) and the position of the geometric detail (6) in the final position (E) for each of the measuring heads (2, 4), and
for checking the motion vector (B₁) for the first measuring head (2) for correspondence with the motion vector (B₂) for the further measuring head (4) or further measuring heads (4).

11. Device for checking the referencing of measuring heads in order to measure the chassis geometry of a vehicle (1), having:
an arrangement of at least two measuring heads (2, 4) which are set up to detect at least one geometric detail (6) of the vehicle (1) during operation, and to determine the position thereof in the coordinate system (K₁, K₂) assigned to each measuring head (2, 4), an evaluation device which has means
for determining a motion vector (B₁, B₂) from the difference between the position of the geometric detail (6) in an initial position (A) and the position of the geometric detail (6) in a final position (E) for each measuring head (2, 4),
for transmitting the motion vector (B₁) for the first measuring head (2) and the motion vector (B₂) for the second measuring head (4) into a common coordinate system (G), and
for checking the motion vector (B₁) for the first measuring head (2) for correspondence with the motion vector (B₂) for the further measuring head (4) or further measuring heads (4).

12. Device according to Claim 10 or 11, in which at least one of the measuring heads (2, 4) has at least one camera (12, 14).

13. Device according to one of Claims 10 to 12, in which the device additionally has a movement apparatus which is designed to execute during operation a relative movement between the arrangement of measuring heads (2, 4), on the one hand, and the vehicle (1), on the other hand, between the initial position (A) and the final position (E), the position of the measuring heads (2, 4) relative to one another being kept constant.

## Revendications

1. Procédé de vérification du référencement d'au moins deux têtes de mesure (2, 4) d'un système mesurant sans contact un train de roulement, le procédé présentant les étapes suivantes :
saisir au moins un détail géométrique (6) de la géométrie d'un véhicule (1) à l'aide des têtes de mesure (2, 4),
déterminer une position initiale du détail géométrique (6) dans le système de coordonnées (K₁, K₂) associé à chaque tête de mesure (2, 4),
transformer la position initiale du détail géométrique (6) en un système de coordonnées (G) commun,
exécuter un déplacement relatif (B₁, B₂) entre les têtes de mesure (2, 4), d'une part, et le véhicule (1), d'autre part, la position relative des têtes de mesure (2, 4) l'une par rapport à l'autre étant maintenue constante,
saisir au moins un détail géométrique (6) du véhicule (1) à l'aide des têtes de mesure (2, 4),
déterminer la position finale du ou des détails géométriques (6) dans le système de coordonnées (K₁, K₂) associé à chaque tête de mesure (2, 4),
transformer la position finale du détail géométrique (6) en le système de coordonnées (G) commun,
déterminer le vecteur de déplacement (B₁, B₂) à partir de la différence entre la position finale et la position initiale du ou des détails géométriques (6) pour chacune des têtes de mesure (2, 4) dans le système de coordonnées (G) commun, et
vérifier si le vecteur de déplacement (B₁) de la première tête de mesure (2) correspond au vecteur de déplacement (B₂) de l'autre tête de mesure (4) ou des autres têtes de mesure (4).

2. Procédé de vérification du référencement d'au moins deux têtes de mesure (2, 4) d'un système mesurant sans contact un train de roulement, le procédé présentant les étapes suivantes :
saisir au moins un détail géométrique (6) de la géométrie d'un véhicule (1) à l'aide des têtes de mesure (2, 4),
déterminer une position initiale du détail géométrique (6) dans le système de coordonnées (K₁, K₂) associé à chaque tête de mesure (2, 4),
exécuter un déplacement relatif (B₁, B₂) entre les têtes de mesure (2, 4), d'une part, et le véhicule (1), d'autre part, la position relative des têtes de mesure (2, 4) l'une par rapport à l'autre étant maintenue constante,
saisir au moins un détail géométrique (6) du véhicule (1) à l'aide des têtes de mesure (2, 4),
déterminer la position finale du ou des détails géométriques (6) dans le système de coordonnées (K₁, K₂) associé à chaque tête de mesure (2, 4),
déterminer les déplacements (B₁, B₂) à partir de la différence entre la position finale et la position initiale du détail géométrique (6) dans le système de coordonnées (K₁, K₂) associé à chacune des têtes de mesure (2, 4),
transformer les déplacements (B₁, B₂) dans un système de coordonnées (G) commun, et
vérifier si le vecteur de déplacement (B₁) de la première tête de mesure (2) correspond au vecteur de déplacement (B₂) de l'autre tête de mesure (4) ou des autres têtes de mesure (4).

3. Procédé selon les revendications 1 ou 2, dans lequel le déplacement (B₁, B₂) comporte au moins deux translations non mutuellement parallèles.

4. Procédé selon l'une des revendications précédentes, dans lequel le détail géométrique (6) saisi par la première tête de mesure (2) sur un premier côté du véhicule (1) et le détail géométrique (6) saisi par la deuxième tête de mesure (4) est situé sur un côté du véhicule (1) situé face au premier côté.

5. Procédé selon l'une des revendications précédentes, dans lequel le véhicule (1) est déplacé par rapport aux têtes de mesure (2, 4) immobiles.

6. Procédé selon l'une des revendications précédentes, dans lequel les têtes de mesure (2, 4) sont déplacées par rapport au véhicule (1).

7. Procédé selon l'une des revendications précédentes, dans lequel le procédé comporte en outre l'étape qui consiste à ajuster finement les têtes de mesure (2, 4).

8. Procédé selon la revendication 7, dans lequel dans l'étape d'ajustement fin des têtes de mesure (2, 4), les vecteurs de déplacement (B₁, B₂) déterminés pour les têtes de mesure (2, 4) sont amenés à se correspondre.

9. Procédé selon les revendications 7 ou 8, dans lequel l'ajustement fin comporte l'adaptation de paramètres de transformation de la position dans les systèmes locaux de coordonnées (K₁, K₂) en le système de coordonnées (G) commun.

10. Dispositif de vérification du référencement de têtes de mesure, pour la mesure de la géométrie du train de roulement d'un véhicule (1), le dispositif présentant :
un ensemble constitué d'au moins deux têtes de mesure (2, 4) conçues pour saisir en fonctionnement au moins un détail géométrique (6) du véhicule (1) et déterminer sa position dans le système de coordonnées (K₁, K₂) associé à chaque tête de mesure (2, 4),
un dispositif d'évaluation qui présente des moyens qui permettent
de transformer la position du détail géométrique (6) dans une position initiale (A) et la position du détail géométrique (6) dans une position finale (E) depuis le système de coordonnées (K₁, K₂) de chaque tête de mesure (2, 4) jusque dans un système de coordonnées (G) commun,
à partir de la différence entre la position du détail géométrique (6) en position initiale (A) et la position du détail géométrique (6) en position finale (E), de déterminer pour chacune des têtes de mesure (2, 4) un vecteur de déplacement (B₁, B₂) dans le système de coordonnées (G) commun, et
de vérifier si le vecteur de déplacement (B₁) de la première tête de mesure (2) correspond au vecteur de déplacement (B₂) de l'autre tête de mesure (4) ou des autres têtes de mesure (4).

11. Dispositif de vérification du référencement de têtes de mesure, pour la mesure de la géométrie du train de roulement d'un véhicule (1), le dispositif présentant :
un ensemble constitué d'au moins deux têtes de mesure (2, 4) conçues pour saisir en fonctionnement au moins un détail géométrique (6) du véhicule (1) et déterminer sa position dans le système de coordonnées (K₁, K₂) associé à chaque tête de mesure (2, 4),
un dispositif d'évaluation qui présente des moyens qui permettent
de déterminer un vecteur de déplacement (B₁, B₂) pour chacune des têtes de mesure (2, 4) à partir de la différence entre la position du détail géométrique (6) en position initiale (A) et la position du détail géométrique (6) en position finale (E),
de transformer le vecteur de déplacement (B₁) de la première tête de mesure (2) et le vecteur de déplacement (B₂) de la deuxième tête de mesure (4) dans un système de coordonnées (G) commun, et
de vérifier si le vecteur de déplacement (B₁) de la première tête de mesure (2) correspond au vecteur de déplacement (B₂) de l'autre tête de mesure (4) ou des autres têtes de mesure (4).

12. Dispositif selon les revendications 10 ou 11, dans lequel au moins l'une des têtes de mesure (2, 4) présente au moins une caméra (12, 14).

13. Dispositif selon l'une des revendications 10 à 12, dans lequel le dispositif présente en outre un dispositif de déplacement configuré pour, en déplacement, exécuter un déplacement relatif entre l'agencement des têtes de mesure (2, 4), d'une part, et le véhicule (1), d'autre part, entre la position initiale (A) et la position finale (E), la position relative des têtes de mesure (2, 4) l'une par rapport à l'autre étant maintenue constante.
